# EUROPEAN PATENT APPLICATION

(11) **EP 4 787 996 A1**
(43) Date of publication of application: **05.08.2026**
(21) Application number: 24870045.2
(22) Date of filing: 23.07.2024
(51) Int. Cl.: H04W 72/0446

(54) **SIGNAL RECEIVING METHOD AND APPARATUS, SIGNAL SENDING METHOD AND APPARATUS, AND STORAGE MEDIUM**

(30) Priority: 26.09.2023 CN 202311255738
(71) Applicant: Datang Mobile Communications Equipment Co., Ltd., Beijing 100085 (CN)
(72) Inventor: MA, Xinyu, Beijing 100085 (CN); CHENG, Fangchen, Beijing 100085 (CN); WANG, Jiaqing, Beijing 100085 (CN); YANG, Meiying, Beijing 100085 (CN)
(74) Representative: Studio Torta S.p.A.
(86) International application number: PCT/CN2024/107068
(87) International publication number: WO 2025/066490

(57) **Abstract**

Provided in the embodiments of the present disclosure are a signal receiving method and apparatus, a signal sending method and apparatus, and a storage medium. The method comprises: receiving a first signal sent by a second device, the first signal being used for triggering the first device to communicate with the second device, and/or, the first signal being used for triggering the first device to execute a first operation, wherein the first signal carries information corresponding to the first device of at least one device type.

## Description

### CROSS REFERENCE TO RELATED APPLICATION

This application claims priority to Chinese patent application No. 202311255738.8, filed on September 26, 2023, named "signal receiving method and apparatus, signal sending method and apparatus, and storage medium", the entire content of which is hereby introduced into this application as a reference.

### TECHNICAL FIELD

The disclosure relates to a field of communication technologies, and particularly to a method and an apparatus for receiving a signal, a method and an apparatus for sending a signal, and a storage medium.

### BACKGROUND

A manner of signal generation and transmission in a new radio (NR) system requires a terminal to have a capability for independently generating and sending the signal. The terminal needs to have a stable power supply to support a signal processing procedure such as complex modulation and coding, and electromagnetic wave transmission of a radio frequency device.

To solve human and material costs caused by a fact that an Internet of Things (IoT) device is all powered by batteries and need regular charging or battery replacement, the 3rd generation partnership project (3GPP) has newly defined a device type: an ambient-Internet of Things (A-IoT) device. The A-IoT device obtains energy relying on a manner such as wind, light, pressure, wireless signals in the environment, with characteristics of low energy consumption and low cost.

However, some A-IoT devices do not have or only have a limited energy storage capability, do not have a capability of active communication, and energy storage capacities of the A-IoT devices are insufficient to support them to autonomously perform signal generation and sending. That is, a signal structure and a signal transmission process in the NR system may not be directly applied to a communication scenario of the A-IoT device, and may not meet a communication requirement of the A-IoT device.

### SUMMARY

In view of above problems existing in the related art, embodiments of the disclosure provide a method and an apparatus for receiving a signal, a method and an apparatus for sending a signal, and a storage medium.

According to a first aspect, embodiments of the disclosure provide a method for receiving a signal, performed by a first device, including: receiving a first signal sent by a second device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: ambient-Internet of Things (A-IoT) device type A; A-IoT device type B; or A-IoT device type C.

In some embodiments, the method also includes: determining, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the method also includes: sending a response signal to the second device based on the first signal, the response signal including response information of some or all of the information carried in the first signal.

In some embodiments, sending the response signal to the second device includes: sending the response signal to the second device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, sending the response signal to the second device includes: sending the response signal on a continuous time domain resource and a continuous frequency domain resource; or sending the response signal on a continuous time domain resource and a discontinuous frequency domain resource; or sending the response signal on a discontinuous time domain resource and a continuous frequency domain resource; or sending the response signal on a discontinuous time domain resource and a discontinuous frequency domain resource.

In some embodiments, the first operation includes: performing synchronization with the second device based on timing information of the second device carried in the first signal and/or fourth indication information carried in the first signal for instructing the first device to obtain the timing information.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In some embodiments, receiving the first signal sent by the second device includes: receiving the first signal sent by the second device in a form of a bit stream.

In some embodiments, receiving the first signal sent by the second device includes: receiving the first signal on a continuous time domain resource and a continuous frequency domain resource; or receiving the first signal on a continuous time domain resource and a discontinuous frequency domain resource; or receiving the first signal on a discontinuous time domain resource and a continuous frequency domain resource; or receiving the first signal on a discontinuous time domain resource and a discontinuous frequency domain resource.

In some embodiments, the first signal further carries at least one of: identity (ID) information of the first device; or group ID information of a group to which the first device belongs.

According to a second aspect, embodiments of the disclosure also provide a method for sending a signal, performed by a second device, including: sending a first signal to a first device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the method also includes: indicating at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the method further includes: receiving a response signal sent by the first device based on the first signal, the response signal including response information of some or all of the information carried in the first signal.

In some embodiments, receiving the response signal sent by the first device based on the first signal includes: receiving the response signal sent by the first device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, receiving the response signal sent by the first device based on the first signal includes: receiving the response signal on a continuous time domain resource and a continuous frequency domain resource; or receiving the response signal on a continuous time domain resource and a discontinuous frequency domain resource; or receiving the response signal on a discontinuous time domain resource and a continuous frequency domain resource; or receiving the response signal on a discontinuous time domain resource and a discontinuous frequency domain resource.

In some embodiments, the first signal carries timing information of the second device and/or fourth indication information for instructing the first device to obtain the timing information, and the first operation includes performing synchronization with the second device.

In some embodiments, the first signal carries fifth indication information for indicating energy of the first signal and/or sixth indication information for instructing the first device to obtain the energy of the first signal, and the first operation includes obtaining the energy of the first signal.

In some embodiments, sending the first signal to the first device includes: sending the first signal to the first device in a form of a bit stream.

In some embodiments, sending the first signal to the first device includes: sending the first signal on a continuous time domain resource and a continuous frequency domain resource; or sending the first signal on a continuous time domain resource and a discontinuous frequency domain resource; or sending the first signal on a discontinuous time domain resource and a continuous frequency domain resource; or sending the first signal on a discontinuous time domain resource and a discontinuous frequency domain resource.

In some embodiments, the first signal further carries at least one of: ID information of the first device; or group ID information of a group to which the first device belongs.

According to a third aspect, embodiments of the disclosure also provide a first device, including a memory, a transceiver, and a processor, in which the memory is configured to store a computer program; the transceiver is configured to send and receive data under control of the processor; and the processor is configured to read the computer program in the memory and perform the method for receiving a signal provided in the first aspect above.

In some embodiments, the at least one device type includes: A-IoT device type A; A-IoT device type B; or A-IoT device type C.

In some embodiments, the processor is further configured to perform: determining, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the processor is further configured to perform: sending a response signal to the second device based on the first signal, the response signal including response information of some or all of the information carried in the first signal.

In some embodiments, sending the response signal to the second device includes: sending the response signal to the second device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, sending the response signal to the second device includes: sending the response signal on a continuous time domain resource and a continuous frequency domain resource; or sending the response signal on a continuous time domain resource and a discontinuous frequency domain resource; or sending the response signal on a discontinuous time domain resource and a continuous frequency domain resource; or sending the response signal on a discontinuous time domain resource and a discontinuous frequency domain resource.

In some embodiments, the first operation includes: performing synchronization with the second device based on timing information of the second device carried in the first signal and/or fourth indication information carried in the first signal for instructing the first device to obtain the timing information.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In some embodiments, receiving the first signal sent by the second device includes: receiving the first signal sent by the second device in a form of a bit stream.

In some embodiments, receiving the first signal sent by the second device includes: receiving the first signal on a continuous time domain resource and a continuous frequency domain resource; or receiving the first signal on a continuous time domain resource and a discontinuous frequency domain resource; or receiving the first signal on a discontinuous time domain resource and a continuous frequency domain resource; or receiving the first signal on a discontinuous time domain resource and a discontinuous frequency domain resource.

In some embodiments, the first signal also carries at least one of: ID information of the first device; or group ID information of a group to which the first device belongs.

According to a fourth aspect, embodiments of the disclosure further provide a second device, including a memory, a transceiver, and a processor, in which the memory is configured to store a computer program; the transceiver is configured to send and receive data under control of the processor; and the processor is configured to read the computer program in the memory and perform the method for sending a signal provided in the second aspect above.

In some embodiments, the at least one device type includes: A-IoT device type A; A-IoT device type B; or A-IoT device type C.

In some embodiments, the processor is further configured to perform: indicating at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the processor is further configured to perform: receiving a response signal sent by the first device based on the first signal, the response signal including response information of some or all of the information carried in the first signal.

In some embodiments, receiving the response signal sent by the first device based on the first signal includes: receiving the response signal sent by the first device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, receiving the response signal sent by the first device based on the first signal includes: receiving the response signal on a continuous time domain resource and a continuous frequency domain resource; or receiving the response signal on a continuous time domain resource and a discontinuous frequency domain resource; or receiving the response signal on a discontinuous time domain resource and a continuous frequency domain resource; or receiving the response signal on a discontinuous time domain resource and a discontinuous frequency domain resource.

In some embodiments, the first signal carries timing information of the second device and/or fourth indication information for instructing the first device to obtain the timing information, and the first operation includes performing synchronization with the second device.

In some embodiments, the first signal carries fifth indication information for indicating energy of the first signal and/or sixth indication information for instructing the first device to obtain the energy of the first signal, and the first operation includes obtaining the energy of the first signal.

In some embodiments, sending the first signal to the first device includes: sending the first signal to the first device in a form of a bit stream.

In some embodiments, sending the first signal to the first device includes: sending the first signal on a continuous time domain resource and a continuous frequency domain resource; or sending the first signal on a continuous time domain resource and a discontinuous frequency domain resource; or sending the first signal on a discontinuous time domain resource and a continuous frequency domain resource; or sending the first signal on a discontinuous time domain resource and a discontinuous frequency domain resource.

In some embodiments, the first signal further carries at least one of: ID information of the first device; or group ID information of a group to which the first device belongs.

According to a fifth aspect, embodiments of the disclosure also provide an apparatus for receiving a signal, including: a first receiving unit, configured to receive a first signal sent by a second device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the apparatus also includes: a determining unit, configured to determine, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the apparatus also includes: a first sending unit, configured to send a response signal to the second device based on the first signal, the response signal including response information of some or all of the information carried in the first signal.

In some embodiments, the first sending unit is configured to: send the response signal to the second device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, the first sending unit is configured to: send the response signal on a continuous time domain resource and a continuous frequency domain resource; or send the response signal on a continuous time domain resource and a discontinuous frequency domain resource; or send the response signal on a discontinuous time domain resource and a continuous frequency domain resource; or send the response signal on a discontinuous time domain resource and a discontinuous frequency domain resource.

In some embodiments, the first operation includes: performing synchronization with the second device based on timing information of the second device carried in the first signal and/or fourth indication information carried in the first signal for instructing the first device to obtain the timing information.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In some embodiments, the first receiving unit is configured to: receive the first signal sent by the second device in a form of a bit stream.

In some embodiments, the first receiving unit is configured to: receive the first signal on a continuous time domain resource and a continuous frequency domain resource; or receive the first signal on a continuous time domain resource and a discontinuous frequency domain resource; or receive the first signal on a discontinuous time domain resource and a continuous frequency domain resource; or receive the first signal on a discontinuous time domain resource and a discontinuous frequency domain resource.

In some embodiments, the first signal further carries at least one of: ID information of the first device; or group ID information of a group to which the first device belongs.

According to a sixth aspect, embodiments of the disclosure also provide an apparatus for sending a signal, including: a second sending unit, configured to send a first signal to a first device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the apparatus further includes: an indicating unit, configured to indicate at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the apparatus also includes: a second receiving unit, configured to receive a response signal sent by the first device based on the first signal, the response signal including response information of some or all of the information carried in the first signal.

In some embodiments, the second receiving unit is configured to: receive the response signal sent by the first device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, the second receiving unit is configured to: receive the response signal on a continuous time domain resource and a continuous frequency domain resource; or receive the response signal on a continuous time domain resource and a discontinuous frequency domain resource; or receive the response signal on a discontinuous time domain resource and a continuous frequency domain resource; or receive the response signal on a discontinuous time domain resource and a discontinuous frequency domain resource.

In some embodiments, the first signal carries timing information of the second device and/or fourth indication information for instructing the first device to obtain the timing information, and the first operation includes performing synchronization with the second device.

In some embodiments, the first signal carries fifth indication information for indicating energy of the first signal and/or sixth indication information for instructing the first device to obtain the energy of the first signal, and the first operation includes obtaining the energy of the first signal.

In some embodiments, the second sending unit is configured to: send the first signal to the first device in a form of a bit stream.

In some embodiments, the second sending unit is configured to: send the first signal on a continuous time domain resource and a continuous frequency domain resource; or send the first signal on a continuous time domain resource and a discontinuous frequency domain resource; or send the first signal on a discontinuous time domain resource and a continuous frequency domain resource; or send the first signal on a discontinuous time domain resource and a discontinuous frequency domain resource.

In some embodiments, the first signal further carries at least one of: ID information of the first device; or group ID information of a group to which the first device belongs.

According to a seventh aspect, embodiments of the disclosure further provide a processor-readable storage medium. The processor-readable storage medium is stored with a computer program. The computer program is configured to cause a processor to perform the method for receiving a signal provided in the first aspect above, or the method for sending a signal provided in the second aspect above.

According to an eighth aspect, embodiments of the disclosure also provide a non-transitory readable storage medium. The non-transitory readable storage medium is stored with a computer program. The computer program is configured to cause a computer to perform the method for receiving a signal provided in the first aspect above, or the method for sending a signal provided in the second aspect above.

According to a ninth aspect, embodiments of the disclosure also provide a communication device. The communication device is stored with a computer program. The computer program is configured to cause the communication device to perform the method for receiving a signal provided in the first aspect above, or the method for sending a signal provided in the second aspect above.

According to a tenth aspect, embodiments of the disclosure also provide a chip product. The chip product is stored with a computer program. The computer program is configured to cause the chip product to perform the method for receiving a signal provided in the first aspect above, or the method for sending a signal provided in the second aspect above.

With the method and the apparatus for receiving the signal, the method and the apparatus for sending the signal, and the storage medium provided by embodiments of the disclosure, by using the first signal which is sent by the second device and carries the information corresponding to the at least one device type of the first device, the first device is triggered to communicate with the second device, and/or, the first device is triggered to perform the first operation, which fully considers characteristics of the device with a limited storage capability and a limited independent signal generation capability such as the A-IoT device in the aspect of energy storage and signal transmission, achieves a communication solution for the device with the limited storage capability and the limited independent signal generation capability such as the A-IoT device, and simultaneously reduces the resource overhead and the delay of communication of the A-IoT device.

### BRIEF DESCRIPTION OF THE DRAWINGS

In order to clearly illustrate technical solutions in embodiments of the disclosure or in the related art, a brief introduction is made below to accompanying drawings required for a description of the embodiments or the related art. Obviously, the accompanying drawings in the following descriptions are only some embodiments of the disclosure, and for those skilled in the art, other accompanying drawings may be obtained according to these accompanying drawings without creative labor.
FIG. 1 is a flow chart illustrating a method for receiving a signal according to an embodiment of the disclosure.
FIG. 2 is a schematic diagram illustrating a time-domain continuous response signal according to an embodiment of the disclosure.
FIG. 3 is a schematic diagram illustrating a time-domain discontinuous response signal according to an embodiment of the disclosure.
FIG. 4 is a schematic diagram illustrating a frequency-domain continuous response signal according to an embodiment of the disclosure.
FIG. 5 is a schematic diagram illustrating a frequency-domain discontinuous response signal according to an embodiment of the disclosure.
FIG. 6 is a schematic diagram illustrating a time-domain continuous first signal according to an embodiment of the disclosure.
FIG. 7 is a schematic diagram illustrating a time-domain discontinuous first signal according to an embodiment of the disclosure.
FIG. 8 is a schematic diagram illustrating a frequency-domain continuous first signal according to an embodiment of the disclosure.
FIG. 9 is a schematic diagram illustrating a frequency-domain discontinuous first signal according to an embodiment of the disclosure.
FIG. 10 is a flow chart illustrating a method for sending a signal according to an embodiment of the disclosure.
FIG. 11 is a flow chart illustrating a method for transmitting a signal according to an embodiment of the disclosure.
FIG. 12 is a block diagram illustrating a first device according to an embodiment of the disclosure.
FIG. 13 is a block diagram illustrating a second device according to an embodiment of the disclosure.
FIG. 14 is a block diagram illustrating an apparatus for receiving a signal according to an embodiment of the disclosure.
FIG. 15 is a block diagram illustrating an apparatus for sending a signal according to an embodiment of the disclosure.

### DETAILED DESCRIPTION

An IoT device is powered by a battery, so regular charging or battery replacement is needed, which causing a lot of manpower and material costs. To further reduce the cost of the IoT device and expand an application scope, an A-IoT device has been newly defined in 3rd generation partnership project (3GPP). The A-IoT device obtains energy relying on a manner such as wind, light, pressure, wireless signals in the environment, with characteristics of low energy consumption and low cost.

A manner of signal generation and transmission in a new radio (NR) system requires a terminal/user equipment (UE) to have a capability for independently generating and sending the signal. The terminal needs to have a stable power supply to support a signal processing procedure such as complex modulation and coding, and electromagnetic wave transmission of a radio frequency device.

In the NR system, an NR terminal transmits a signal based on scheduling of a base station, that is, the base station sends control information to the NR terminal, to indicate on which physical transmission resource the NR terminal transmits the signal; and the NR terminal, based on an indication of the base station, generates the signal based on a specified signal structure and sends the signal on a specified time-frequency resource. Energy required by the NR terminal for generating and sending a radio frequency signal all comes from a battery installed in the NR terminal. Therefore, a sending signal and a receiving signal are independent in energy, and usually have a certain time interval in time, thus meeting a processing time requirement for a complex received signal decoding process and a complex sending signal generation process.

However, some A-IoT devices do not have or only have a limited energy storage capability, do not have a capability to actively communicate, and the energy storage capability is insufficient to support the A-IoT device to autonomously perform signal generation and sending. That is, a signal structure and a signal transmission process in the NR system may not be directly applied to a communication scenario of the A-IoT device, and may not meet a communication requirement of the A-IoT device. Currently, communication technologies for the A-IoT device in the NR system remain a blank.

Furthermore, in an NR transmission mechanism, sending of for synchronization, positioning, data scheduling, initial access reference signals or signalings, and the like are independent of each other. In an application scenario of the A-IoT device, there is generally a high density of device connections. If an existing mechanism is used, a transmission delay may be caused.

Different A-IoT device types have different energy storage capacities and different signal sending capabilities. If an independent signal transmission manner is designed for each of three types of devices separately, a delay and transmission resource overhead may be caused.

Aiming at the above problems existing in the related art, embodiments of the disclosure provide a method and an apparatus for receiving a signal, a method and an apparatus for sending a signal, and a storage medium. By using a first signal sent by a second device and carrying information corresponding to at least one device type of a first device, the first device is triggered to communicate with the second device, and/or, the first device is triggered to perform the first operation, which fully considers characteristics of the device with a limited storage capability and a limited independent signal generation capability such as the A-IoT device in an aspect such as energy storage and signal transmission, achieves a communication solution for the device with the limited storage capability and the limited independent signal generation capability such as the A-IoT device, fills a blank of a communication technology for the A-IoT device in a current NR system, and simultaneously reduces complexity of a signaling design and resource overhead and a delay of signaling transmission as much as possible.

In embodiments of the disclosure, the term "and/or" describes an associated relationship between associated objects, representing that there may be three relationships, for example, A and/or B means A alone, both A and B at the same time, and B alone. The character "/" generally indicates that a relationship between context associated objects is an "or" relationship.

In embodiments of the disclosure, the term "a plurality of" refers to two or more, and other quantifiers are similar thereto.

In embodiments of the disclosure, "determining B based on A" means that a factor A is considered when B is determined, which is not limited to "determining B merely based on A", but also includes "determining B based on A and C", "determining B based on A, C and E", "determining C based on A, and further determining B based on C", and so on. In addition, "using A as a condition to determine B" may also be included, for example, "when A meets a first condition, determining B using a first method"; for another example, "when A meets a second condition, determining B"; for another example, "when A meets a third condition, determining B based on a first parameter", and so on. Of course, A may also be used as a condition of a factor for determining B, for example, "when A meets a first condition, determining C using a first method, and further determining B based on C", and so on.

The technical solution according to embodiments of the disclosure may be applied to multiple systems, especially a 5G system, a 5G Advanced system, a 6G system, and their evolution systems. For example, an applicable system may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, and so on. All the multiple systems include a terminal and a network device. The system may also include a core network part, such as, an evolved packet system (EPS), a 5G system (5GS), and so on.

The terminal in embodiments of the disclosure may be a device that provides speech and/or data connectivity to a user, a handheld device with a wireless connection capability, or other processing devices connected to a wireless modem, etc. In different systems, names of the terminal may also be different. For example, in the 5G system, the terminal may be called a UE. A wireless terminal may communicate with one or more core networks (CNs) via a radio access network (RAN). The wireless terminal may be a mobile terminal, such as a mobile phone (or referred to as "cellular" phone), and a computer with a mobile terminal, such as a portable, pocket-sized, handheld, computer built-in or vehicle-mounted mobile device, which exchange language and/or data with a wireless access network, for example, the wireless terminal may be a personal communication service (PCS) phone, a cordless phone, a session initiated protocol (SIP) phone, a wireless local loop (WLL) station, a personal digital assistant (PDA), and so on. The wireless terminal may also be referred to as a system, a subscriber unit, a subscriber station, a mobile station, a mobile, a remote station, an access point, a remote terminal, an access terminal, a user terminal, a user agent, and a user device, which is not limited in embodiments of the disclosure.

The network device involved in embodiments of the disclosure may be a base station, which may include multiple cells providing services to the terminal. Depending on detailed application scenarios, the base station may also be referred to as an access point, or may be a device in an access network that communicates with the wireless terminal on an air interface via one or more sectors, or may be called other names. The network device may be configured to interchange a received air frame with an Internet protocol (IP) packet and act as a router between the wireless terminal and a remaining part of the access network, in which the remaining part of the access network may include an IP communication network. The network device may also coordinate attribute management for the air interface. For example, the network device involved in embodiments of the disclosure may be a network device (base transceiver station, BTS) in the GSM or the CDMA, or a network device (NodeB) in the WCDMA, or an evolved network device (an evolved node B, eNB or e-NodeB) in an LTE system, or a 5G base station (gNB) in a 5G network architecture (next generation system), or may be a home evolved node B (HeNB), a relay node, a femto, a pico, etc., which is not limited in embodiments of the disclosure. In some network architectures, the network device may include a centralized unit (CU) node and a distributed unit (DU) node, and the centralized unit and the distributed unit may also be geographically separated.

The network device and the terminal may perform multi input multi output (MIMO) transmission each using one or more antennas, and the MIMO transmission may be single user MIMO (SU-MIMO) or multiple user MIMO (MU-MIMO). According to a form and a quantity of a root antenna combination, the MIMO transmission may be 2D-MIMO, 3D-MIMO, FD-MIMO, or massive-MIMO, or may be diversity transmission, precoding transmission, beamforming transmission, and so on.

Clear and complete description may be made below to the technical solution in embodiments of the disclosure with reference to accompanying drawings in embodiments of the disclosure. Obviously, the described embodiments are only some of embodiments of the disclosure, not all of the embodiments. Based on embodiments of the disclosure, all other embodiments obtained by those skilled in the art without creative work should fall within the protection scope of the disclosure.

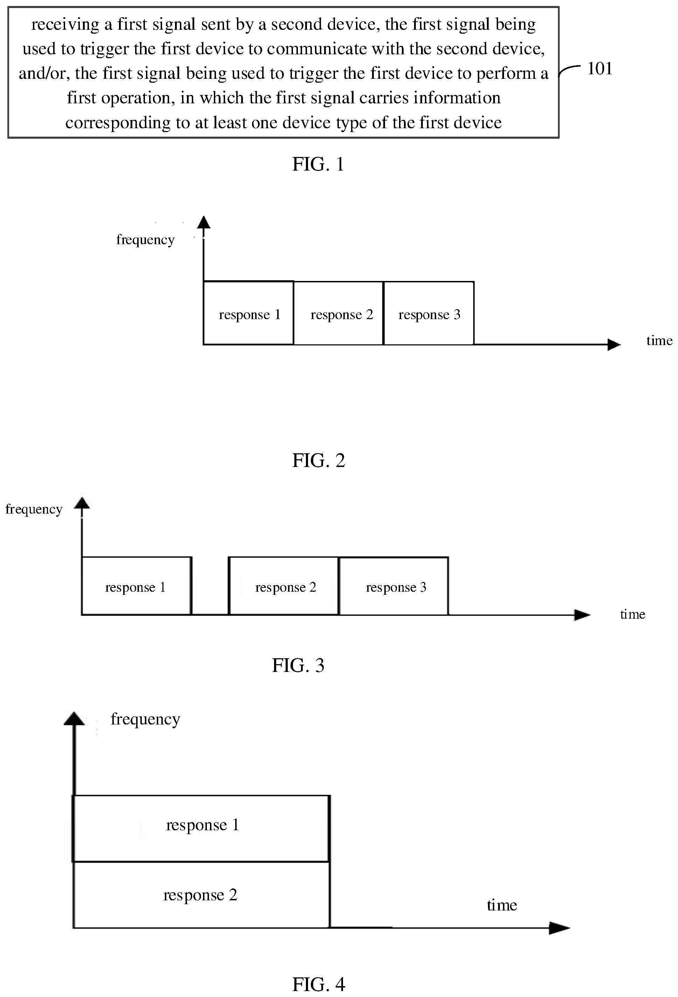

FIG. 1 is a flow chart illustrating a method for receiving a signal according to an embodiment of the disclosure. As illustrated in FIG. 1, an execution subject of the method is a first device. The first device is a terminal, such as an NR terminal, an A-IoT device, and so on. Embodiments of the disclosure mainly describe the A-IoT device. The method at least includes the following.

At step S101, a first signal sent by a second device is received, the first signal being used to trigger the first device to communicate with the second device, and/or, the first signal being used to trigger the first device to perform a first operation, in which the first signal carries information corresponding to at least one device type of the first device.

In detail, the second device may be a network device, such as, a base station, an integrated access backhaul (IAB) node, a relay node, an auxiliary node, an intermediate node, etc., or may be a UE.

The first device receives the first signal sent by the second device, and the first signal may be a query signal. An indicated object of the first signal may be one or more first devices, and an indicated first device may belong to one or more device types.

The first signal carries one or more pieces of information, and the one or more pieces of information correspond to the at least one device type of the first device. In embodiments of the disclosure, the device type mainly refers to different types of the A-IoT devices, and the type of the A-IoT device may be distinguished based on a storage capability and an independent signal generation capability of the A-IoT device.

Alternatively, the first signal merely carries one or more pieces of information corresponding to a same type of the A-IoT device. Alternatively, the first signal carries one or more pieces of information corresponding to different types of the A-IoT devices.

Alternatively, the first signal is used to trigger the first device to communicate with the second device, that is, the first device communicates with the second device after receiving the first signal, and sends a signal to the second device, for example, in a scenario such as data transmission and reception, initial access, mobility management, and positioning.

Alternatively, the first signal is used to trigger the first device to perform the first operation. For example, the first device does not need to send the signal to the second device in a scenario such as synchronization and energy harvesting.

Alternatively, the first signal is used to trigger the first device to communicate with the second device and to trigger the first device to perform the first operation.

With the method for receiving the signal according to embodiments of the disclosure, by using the first signal sent by the second device and carrying the information corresponding to the at least one device type of the first device, the first device is triggered to communicate with the second device, and/or, the first device is triggered to perform the first operation, which fully considers characteristics of the device with a limited storage capability and a limited independent signal generation capability such as the A-IoT device in the aspects of energy storage and signal transmission, and achieves a communication solution for the device with the limited storage capability and the limited independent signal generation capability such as the A-IoT device.

In some embodiments, the at least one device type includes: A-IoT device type A; A-IoT device type B; or A-IoT device type C.

In detail, in the 3GPP, based on whether the A-IoT device has the energy storage capability and the independent signal generation capability, the A-IoT device is classified into following three types:
① A-IoT device type A: has no energy storage capability and no independent signal generation capability, and performs signal transmission in a backscatter manner.
② A-IoT device type B: has the energy storage capability, has no independent signal generation capability, and performs signal transmission in the backscatter manner.
③ A-IoT device type C: has the energy storage capability and the independent signal generation capability, and performs signal transmission using a radio frequency device.

The embodiments of the disclosure mainly involve distinguishing and processing different types of the A-IoT devices. Alternatively, the multiple first devices indicated by the first signal may also include an NR device. A scenario where the NR device performs cooperative communication with the A-IoT device is not excluded in the disclosure. It should be further noted that the device type of the A-IoT device may also be classified in other manners based on an actual requirement.

With the method for receiving the signal according to embodiments of the disclosure, the first device is classified based on the energy storage capability and the independent signal generation capability of the first device, and the communication for different device types of the first devices is supported, further improving the communication solution for the device with the limited storage capability and the limited independent signal generation capability such as the A-IoT device, and simultaneously reducing the complexity of the signaling design and the resource overhead and the delay of signaling transmission.

In some embodiments, the method for receiving the signal also includes: determining, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In detail, the first device may determine relevant information of the first signal via a manner predefined by a protocol or a manner preconfigured by the network device (for example, preconfigured by the second device). Detailed content may include at least one of the following.
① The signal waveform corresponding to the information carried in the first signal. Different signal waveforms depend on different modulation manners, and the modulation manners may be amplitude shift keying (ASK), frequency shift keying (FSK), orthogonal frequency division multiplexing (OFDM), etc. Alternatively, different information carried in the first signal correspond to the same signal waveform. Alternatively, different information carried in the first signal correspond to different signal waveforms. Alternatively, information corresponding to different device types correspond to the same signal waveforms. Alternatively, information corresponding to different device types correspond to different signal waveforms.
② The manner in which the signal corresponding to the information carried in the first signal constitutes the first signal. Manners in which signals corresponding to different information constitute the first signal may be time division multiplexing, frequency division multiplexing, code division multiplexing, etc.
③ The order of the information carried in the first signal. The order may be randomly generated for different information, or may be generated based on a certain rule, for example, based on a priority of scheduling or service requirements.
④ The time domain resource occupied by the information carried in the first signal. Furthermore, the information corresponding to different device types may occupy the same or different time domain resources. Therefore, the first device may be further informed, in a manner predefined or preconfigured by a protocol, of the time domain resources occupied by the information corresponding to different device types of first devices in the first signal.
⑤ The frequency domain resource occupied by the information carried in the first signal. Furthermore, the information corresponding to different device types may occupy the same or different frequency domain resources. Therefore, the first device may be further informed, in a manner predefined or preconfigured by a protocol, of the frequency domain resources occupied by the information corresponding to different device types of the first devices in the first signal.

The preconfigured manner may carry above content of the first signal by a message, such as a system message, a radio resource control (RRC) message, a medium access control control element (MAC CE), and a downlink control indication (DCI) that is sent by the second device.

With the method for receiving the signal according to embodiments of the disclosure, the first device is informed of the relevant information of the first signal in the predefined or preconfigured manner, for example, the relevant information is a signal waveform corresponding to each information carried in the first signal, an occupied time-frequency resource, an order constituting the first signal, a manner constituting the first signal, etc., such that different quantities and types of first devices may receive the first signal, which further improves the communication solution for the device with the limited storage capability and the limited independent signal generation capability such as the A-IoT device, and simultaneously reduces the complexity of the signaling design and the resource overhead and the delay of signaling transmission.

In some embodiments, in a case that the first signal is used to trigger the first device to communicate with the second device, the method also includes: sending a response signal to the second device based on the first signal, the response signal including response information of some or all of the information carried in the first signal.

In detail, the first device receives the first signal sent by the second device, and in some cases, the first device needs to provide feedback to the second device, that is, communicating with the second device, specifically including: sending a response signal to the second device based on the first signal sent by the second device, the response signal including response information of some or all of the information carried in the first signal.

For example, the first signal carries report request information, in which the report request information instructs the first device to report data or control information. For example, the first signal includes positioning information, indicating the first device to send and/or receive a positioning signal. Such type of information often needs the first device to provide feedback to the second device, and of course, the first device may autonomously select whether to carry corresponding response information in the response signal.

For example, when the first signal carries report request information and synchronization information, the first device may carry response information of the report request information in the response signal, and for the synchronization information, the first device may not need to provide feedback response information to the second device, and may complete synchronization by itself based on timing information of the second device. For example, when the first signal carries energy harvesting information and positioning information, the first device may carry response information of the positioning information in the response signal, and for the energy harvesting information, the first device may collect energy of the first signal by itself for subsequent signal processing and sending, and does not need to provide the feedback response information to the second device.

For another example, the first signal carries report request information, synchronization information, and positioning information. Since the first device has no requirement for positioning, the response signal merely carries response information of the positioning information.

With the method for receiving the signal according to embodiments of the disclosure, when the first device receives the first signal sent by the second device for triggering the first device to communicate with the second device, the first device feeds the response signal back to the device, in which the response signal includes the response information for some or all of the information carried in the first signal, further improving the communication solution for the device with the limited storage capability and the limited independent signal generation capability such as the A-IoT device.

In some embodiments, sending the response signal to the second device includes: sending the response signal to the second device using at least one of backscatter, uplink transmission, or sidelink transmission.

In detail, a backscatter communication system is generally combined by a reader with a radio frequency capability and a tag without the radio frequency capability. The reader sends the radio frequency signal to the tag, and an electromagnetic wave of the radio frequency signal forms a reflected echo upon reaching a surface of a tag antenna, that is, the backscattered signal. By changing an impedance of the antenna, the tag may modulate information into the backscattered signal. The reader receives and reads the backscattered signal from the tag to obtain the information delivered in the tag.

Some A-IoT devices do not have a capability for active communication and may merely perform backscatter on a received signal, and carry information in the backscattered signal. In an A-IoT communication scenario, the tag is the A-IoT device, and the reader may be the base station, the NR terminal, etc.

For a first device with a capability of independently generating a signal, the response signal is sent to the second device by at least one of backscatter, uplink transmission, or sidelink transmission, in which the response signal is a backscattered signal, an uplink signal, or a sidelink transmission signal. For a first device without the capability of independently generating a signal, the response signal is sent to the second device in the backscatter manner, and the response signal is a backscattered signal.

With the method for receiving the signal according to embodiments of the disclosure, based on whether the first device has the capability of independently generating the signal, the response signal is fed back to the second device by the at least one of the backscatter, the uplink transmission, and the sidelink transmission, further improving the communication solution for the device with the limited storage capability and the limited independent signal generation capability, such as the A-IoT device.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In detail, in a scenario where the first device communicates with the second device, the first signal carries one or more pieces of information.

The information often has an indication function. For example, the first indication information for instructing the first device to initiate the initial access procedure may be referred to as initial access information. For example, the second indication information for instructing the first device to receive and/or send the positioning signal may be referred to as positioning information. For example, the indication information for instructing the first device to report information, including report data and control information, may be referred to as report request information.

For another example, the information for performing the authentication on the first device may be referred to as authentication information. For example, the information for verifying the security and integrity of the data stored in the first device may be referred to as integrity verification information. For example, the information for activating the first device wakes up the first device from a non-working state or a state with a low power consumption to start data transmission and reception.

Alternatively, the first signal also carries at least one of: identity (ID) information of the first device; or group ID information of a group to which the first device belongs. The ID information of the first device or ID information of the target device carried in the first signal may be an ID number, indicating that a first device corresponding to the ID information needs to receive and/or respond to the first signal. Carrying the group ID information in the first signal indicates that all first devices in an identified group need to receive and/or respond to the first signal.

With the method for receiving the signal according to embodiments of the disclosure, in a scenario where communication needs to be performed between the first device and the second device, the first signal carries information related to various mechanisms such as data transmission, initial access, mobility management, and positioning, which further improves the communication solution for the device with the limited storage capability and the limited independent signal generation capability such as the A-IoT device, and simultaneously reduces the complexity of the signaling design and the resource overhead and the delay of signaling transmission.

In some embodiments, sending the response signal to the second device includes: sending the response signal on a continuous time domain resource and a continuous frequency domain resource; or sending the response signal on a continuous time domain resource and a discontinuous frequency domain resource; or sending the response signal on a discontinuous time domain resource and a continuous frequency domain resource; or sending the response signal on a discontinuous time domain resource and a discontinuous frequency domain resource.

In detail, the first device sends the response signal to the second device, and a transmission resource used by the response signal may be continuous/discontinuous in a frequency domain/time domain.

In a case that the continuous time domain resource is used, one or more pieces of information included in the response signal may be transmitted in the time domain in different orders. FIG. 2 is a schematic diagram illustrating a time-domain continuous response signal according to an embodiment of the disclosure. As illustrated in FIG. 2, the response signal includes three different response information: response 1, response 2, and response 3 with a transmission order {1,2,3}, transmitted on the continuous time domain resource. The transmission order may also be {1,3,2}, {2,1,3}, {2,3,1}, {3,1,2}, {3,2,1}, etc.

In a case that the discontinuous time domain resource is used, one or more pieces of information included in the response signal may be transmitted in the time domain in different orders and combination manners. FIG. 3 is a schematic diagram illustrating a time-domain discontinuous response signal according to an embodiment of the disclosure. As illustrated in FIG. 3, the response signal includes 3 pieces of different response information: response 1, response 2, and response 3. The 3 pieces of response information are divided into two subsegments in the time domain for transmission, and the two subsegments include 1 piece of response information {1} and 2 pieces of response information {2,3} respectively.

In a case that the continuous frequency domain resource is used, one or more pieces of information included in the response signal may be transmitted in the frequency domain in different orders. FIG. 4 is a schematic diagram illustrating a frequency-domain continuous response signal according to an embodiment of the disclosure. As illustrated in FIG. 4, the response signal includes 2 pieces of different response information: response 1 and response 2, with an information order {1,2}, transmitted on the continuous frequency domain resource. The information order may also be {2,1}.

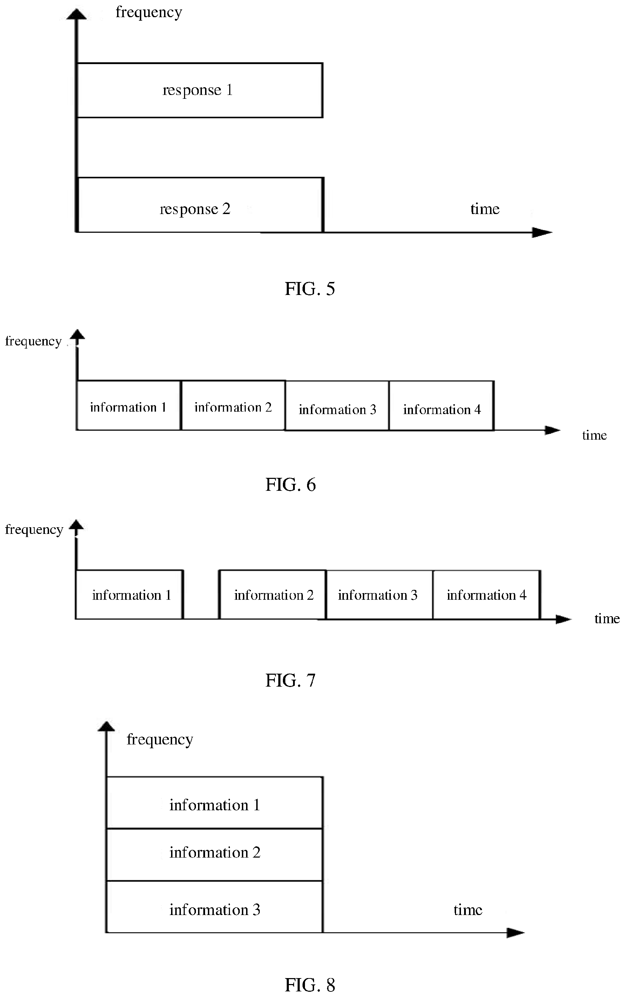

In a case that the discontinuous frequency domain resource is used, one or more pieces of information included in the response signal may be transmitted in the frequency domain in different orders and combination manners. FIG. 5 is a schematic diagram illustrating a frequency-domain discontinuous response signal according to an embodiment of the disclosure. As illustrated in FIG. 5, the response signal includes 2 pieces of different response information: response 1 and response 2. The 2 pieces of the response information are divided into two subsegments in the time domain for transmission, and the two subsegments include 1 piece of response information {1} and 1 piece of response information {2} respectively.

With the method for receiving the signal according to embodiments of the disclosure, it is supported that the first device feeds back the response signal on the continuous/discontinuous time domain/frequency domain resource in a communication scenario where the first device communicates with the second device, further improving the communication solution for the device with the limited storage capability and the limited independent signal generation capability such as the A-IoT device, and simultaneously provides the certain flexibility for scheduling the transmission resource.

Besides a scenario where the first device communicates with the second device and feeds the response signal back to the second device, there is another scenario where the first device performs the first operation based on the information carried in the first signal after receiving the first signal, and does not provide any feedback to the second device, for example, a scenario such as synchronization, energy storage, etc. In a practical implementation, the first signal may often carry multiple types of information, and the multiple types of information includes both information which needs feedback from the first device and information which does not need feedback from the first device.

In some embodiments, the first operation includes: performing synchronization with the second device based on timing information of the second device carried in the first signal and/or fourth indication information carried in the first signal for instructing the first device to obtain the timing information.

In detail, for a synchronization scenario, the first signal at least carries the timing information of the second device and/or the fourth indication information for instructing the first device to obtain the timing information of the first device. The first device completes synchronization with the second device based on such type of information carried in the first signal. The synchronization in embodiments of the disclosure may be fine synchronization or coarse synchronization.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In detail, in an energy storage scenario, the first signal at least carries fifth indication information for indicating energy of the first signal and/or sixth indication information for instructing the first device to obtain the energy of the first signal. The first device obtains the energy of the first signal based on the fifth indication information and/or the sixth indication information.

The first signal is a radio frequency signal. In the case that the first device has an energy storage capability, the first device obtains energy of the radio frequency signal for subsequent signal transmission and reception.

Alternatively, regardless of whether the first device needs to provide feedback of the first signal to the second device or does not need to provide feedback of the first signal to the second device, the first signal may also carry at least one of: ID information of the first device; or group ID information of a group to which the first device belongs. The ID information of the first device or ID information of the target device carried in the first signal may be an ID number, indicating that a first device corresponding to the ID information needs to receive and/or respond to the first signal. Carrying the group ID information in the first signal indicates that all first devices in an identified group need to receive and/or respond to the first signal.

With the method for receiving the signal according to embodiments of the disclosure, it is supported that the first device independently performs a corresponding operation based on the information carried in the first signal in a case that the first signal carries the information that does not need the feedback from the first device, further improving the communication solution for the device with the limited storage capability and the limited independent signal generation capability such as the A-IoT device in a scenario such as synchronization and energy storage.

In some embodiments, receiving the first signal sent by the second device includes: receiving the first signal sent by the second device in a form of a bit stream.

In detail, the form of the first signal may be the form of the bit stream. Different bit fields correspond to different information, which collectively constitute a sequence of the information carried in the first signal.

In some embodiments, receiving the first signal sent by the second device includes: receiving the first signal on a continuous time domain resource and a continuous frequency domain resource; or receiving the first signal on a continuous time domain resource and a discontinuous frequency domain resource; or receiving the first signal on a discontinuous time domain resource and a continuous frequency domain resource; or receiving the first signal on a discontinuous time domain resource and a discontinuous frequency domain resource.

In detail, the first device receives the first signal sent by the second device, and a transmission resource used by the first signal may be continuous/discontinuous in the frequency domain/time domain.

In a case that the continuous time domain resource is used, one or more pieces of information included in the first signal may be transmitted in the time domain in different orders. FIG. 6 is a schematic diagram illustrating a time-domain continuous first signal according to an embodiment of the disclosure. As illustrated in FIG. 6, the first signal includes 4 pieces of different information: information 1, information 2, information 3, and information 4 with a transmission order {1,2,3,4}, transmitted on the continuous time domain resource. The transmission order of the 4 pieces of information may be changed.

In a case that the discontinuous time domain resource is used, one or more pieces of information included in the first signal may be transmitted in the time domain in different orders and combination manners. FIG. 7 is a schematic diagram illustrating a time-domain discontinuous first signal according to an embodiment of the disclosure. As illustrated in FIG. 7, the first signal includes 4 pieces of different information: information 1, information 2, information 3, and information 4. The 4 pieces of information are divided into two subsegments in the time domain for transmission, and the two subsegments include 1 piece of information {1} and 3 pieces of information {2,3,4} respectively. Alternatively, a transmission order of the two subsegments may be changed, and a transmission order of the multiple pieces of information included in one subsegment may also be changed.

In a case that the continuous frequency domain resource is used, one or more pieces of information included in the first signal may be transmitted in the frequency domain in different orders. FIG. 8 is a schematic diagram illustrating a frequency-domain continuous first signal according to an embodiment of the disclosure. As illustrated in FIG. 8, the first signal includes 3 pieces of different information: information 1, information 2, and information 3 with a transmission order {1,2,3}, transmitted on the continuous frequency domain resource. The transmission order of the 3 pieces of information may be changed.

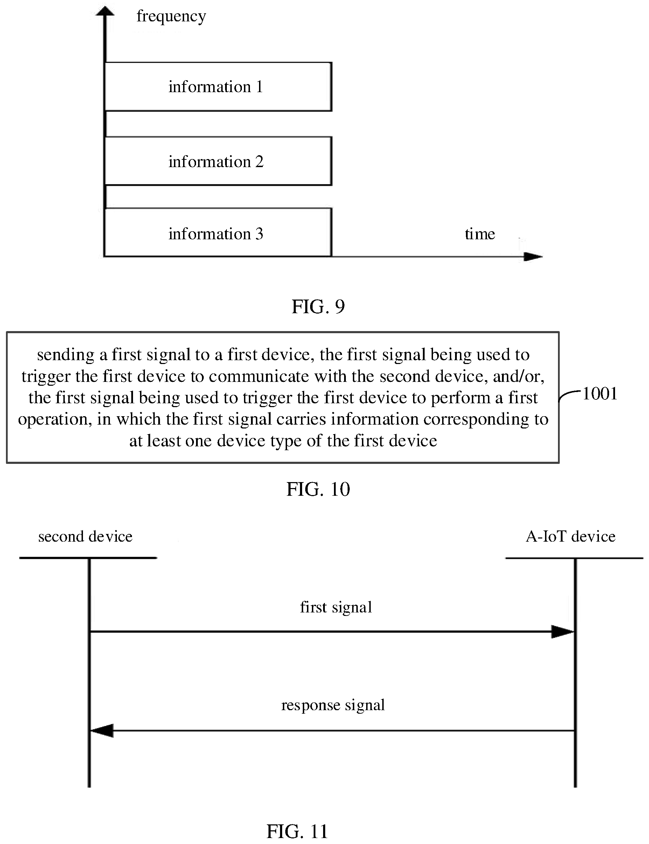

In a case that the discontinuous frequency domain resource is used, one or more pieces of information included in the first signal may be transmitted in the frequency domain in different orders and combination manners. FIG. 9 is a schematic diagram illustrating a frequency-domain discontinuous first signal according to an embodiment of the disclosure. As illustrated in FIG. 9, the first signal includes 3 pieces of different information: information 1, information 2, and information 3. The 3 pieces of information are divided into 3 subsegments in the time domain for transmission, and the 3 subsegments include 1 piece of information, respectively. A transmission order of the 3 subsegments may be changed.

With the method for receiving the signal according to embodiments of the disclosure, it is supported that the first device receives the signal on the continuous/discontinuous time domain/frequency domain resource, further improving the communication solution for the device with the limited storage capability and the limited independent signal generation capability such as the A-IoT device, and simultaneously provides certain flexibility for scheduling the transmission resource.

FIG. 10 is a flow chart illustrating a method for sending a signal according to an embodiment of the disclosure. As illustrated in FIG. 10, an execution subject of the method is a second device. The second device may be a network device, such as, a base station, an IAB node, a relay node, an auxiliary node, an intermediate node, etc., or may be a UE. The method at least includes the following.

At step S1001, a first signal is sent to a first device, the first signal being used to trigger the first device to communicate with the second device, and/or, the first signal being used to trigger the first device to perform a first operation, in which the first signal carries information corresponding to at least one device type of the first device.

In detail, the first device is a terminal, such as, an NR terminal, an A-IoT device, etc. Description is mainly made to the A-IoT device in embodiments of the disclosure.

The second device sends the first signal to the first device, and the first signal may be a query signal. An indicated object of the first signal may be one or more first devices, and an indicated first device may belong to one or more device types.

The first signal carries one or more pieces of information, and the one or more pieces of information correspond to the at least one device type of the first device. In embodiments of the disclosure, the device type mainly refers to different types of the A-IoT devices, and the type of the A-IoT device may be distinguished based on a storage capability and an independent signal generation capability of the A-IoT device.

Alternatively, the first signal merely carries one or more pieces of information corresponding to a same type of the A-IoT device. Alternatively, the first signal carries one or more pieces of information corresponding to different types of the A-IoT devices.

Alternatively, the first signal is used to trigger the first device to communicate with the second device, that is, the first device communicates with the second device after receiving the first signal, and sends a signal to the second device, for example, in a scenario such as data transmission and reception, initial access, mobility management, and positioning.

Alternatively, the first signal is used to trigger the first device to perform the first operation. For example, the first device does not need to send the signal to the second device in a scenario such as synchronization and energy harvesting.

Alternatively, the first signal is used to trigger the first device to communicate with the second device, and also used to trigger the first device to perform the first operation.

With the method for sending the signal according to embodiments of the disclosure, by using the first signal sent by the second device and carrying the information corresponding to the at least one device type of the first device, the first device is triggered to communicate with the second device, and/or, the first device is triggered to perform the first operation, fully considering characteristics of the device with a limited storage capability and a limited independent signal generation capability such as the A-IoT device in the aspects such as energy storage and signal transmission, and achieves a communication solution for the device with the limited storage capability and the limited independent signal generation capability such as the A-IoT device.

In some embodiments, the at least one device type includes: A-IoT device type A; A-IoT device type B; or A-IoT device type C.

In detail, in the 3GPP, based on whether the A-IoT device has an energy storage capability and an independent signal generation capability, the A-IoT device is classified into following three types:
① A-IoT device type A: has no energy storage capability and no independent signal generation capability, and performs signal transmission in a backscatter manner.
② A-IoT device type B: has the energy storage capability, has no independent signal generation capability, and performs signal transmission in the backscatter manner.
③ A-IoT device type C: has the energy storage capability and the independent signal generation capability, and performs signal transmission using a radio frequency device.

The embodiments of the disclosure mainly involve distinguishing and processing different types of the A-IoT devices. Alternatively, the multiple first devices indicated by the first signal may also include an NR device. A scenario where the NR device performs cooperative communication with the A-IoT device is not excluded in the disclosure. It should be further noted that the device type of the A-IoT device may also be classified in other manners based on an actual requirement.

With the method for sending the signal according to embodiments of the disclosure, the first device is classified based on the energy storage capability and the independent signal generation capability of the first device, and the communication for different device types of the first devices is supported, further improves the communication solution for the device with the limited storage capability and the limited independent signal generation capability such as the A-IoT device,

In some embodiments, the method also includes: indicating at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In detail, the second device may indicate relevant information of the first signal by a preconfigured manner. Detailed content may include at least one of:
① The signal waveform corresponding to the information carried in the first signal. Different signal waveforms depend on different modulation manners, and the modulation manners may be ASK, FSK, OFDM, etc. Alternatively, signal waveforms corresponding to different information carried in the first signal are the same. Alternatively, different information carried in the first signal correspond to the same signal waveform. Alternatively, different information carried in the first signal correspond to different signal waveforms. Alternatively, information corresponding to different device types correspond to the same signal waveforms. Alternatively, information corresponding to different device types correspond to different signal waveforms.
② The manner in which the signal corresponding to the information carried in the first signal constitutes the first signal. Manners in which signals corresponding to different information constitute the first signal may be time division multiplexing, frequency division multiplexing, code division multiplexing, etc.
③ The order of the information carried in the first signal. The order may be randomly generated for different information, or may be generated based on a certain rule, for example, based on a priority of scheduling or service requirements.
④ The time domain resource occupied by the information carried in the first signal. Furthermore, the information corresponding to different device types may occupy the same or different time domain resources. Therefore, the first device may be further informed, in a manner predefined or preconfigured by a protocol, of the time domain resources occupied by the information corresponding to different device types of first devices in the first signal.
⑤ The frequency domain resource occupied by the information carried in the first signal. Furthermore, the information corresponding to different device types may occupy the same or different frequency domain resources. Therefore, the first device may be further informed, in a manner predefined or preconfigured by a protocol, of the frequency domain resources occupied by the information corresponding to first devices of different device types in the first signal.

The preconfigured manner may carry above content of the first signal by a message, such as a system message, an RRC message, an MAC CE, and a DCI that is sent to the first device.

With the method for sending the signal according to embodiments of the disclosure, the first device is informed of the relevant information of the first signal in the preconfigured manner, for example, the relevant information is a signal waveform corresponding to each information carried in the first signal, an occupied time-frequency resource, an order constituting the first signal, a manner constituting the first signal, etc., such that different quantities and types of first devices may receive the first signal, which further improves the communication solution for the device with the limited storage capability and the limited independent signal generation capability such as the A-IoT device, and simultaneously reduces the complexity of the signaling design and the resource overhead and the delay of signaling transmission.

In some embodiments, in a case that the first signal is used to trigger the first device to communicate with the second device, the method also includes: receiving a response signal sent by the first device based on the first signal, the response signal including response information of some or all of the information carried in the first signal.

In detail, the second device sends the first signal to the first device. In some cases, feedback of the first device is needed, that is, communication with the second device is needed, specifically including: receiving a response signal sent by the first device based on the first signal, the response signal including response information of some or all of the information carried in the first signal.

For example, the first signal carries report request information, in which the report request information instructs the first device to report data or control information. For example, the first signal includes positioning information, indicating the first device to send and/or receive a positioning signal. Such type of information often needs the first device to provide the feedback to the second device, and of course, the first device may autonomously select whether to carry corresponding response information in the response signal.

For example, when the first signal carries report request information and synchronization information, the response signal may carry response information of the report request information, and for the synchronization information, the first device may not need to provide feedback response information to the second device, and may complete synchronization by itself based on timing information of the second device. For example, in a case that the first signal carries energy harvesting information and positioning information, the response signal may carry response information of the positioning information, and for the energy harvesting information, the first device may collect energy of the first signal by itself for subsequent signal processing and sending, and does not need to provide the feedback response information to the second device.

For another example, the first signal carries report request information, synchronization information, and positioning information. Since the first device has no requirement for positioning, the response signal merely carries response information of the positioning information.

With the method for sending a signal provided in embodiments of the disclosure, the second device receives the response signal sent by the first device based on the first signal, the response signal includes the response information of some or all of the information carried in the first signal, which further improves the communication solution for the device with the limited storage capability and the limited independent signal generation capability such as the A-IoT device, and simultaneously reduces the complexity of the signaling design and the resource overhead and the delay of signaling transmission.

In some embodiments, receiving the response signal sent by the first device based on the first signal includes: receiving the response signal sent by the first device using at least one of backscatter, uplink transmission, or sidelink transmission.

In detail, a backscatter communication system is generally combined by a reader with a radio frequency capability and a tag without the radio frequency capability. The reader sends the radio frequency signal to the tag, and an electromagnetic wave of the radio frequency signal forms a reflected echo upon reaching a surface of a tag antenna, that is, the backscattered signal. By changing an impedance of the antenna, the tag may modulate information into the backscattered signal. The reader receives and reads the backscattered signal from the tag to obtain the information delivered in the tag.

Some A-IoT devices do not have a capability for active communication and may merely perform backscatter on a received signal, and carry information in the backscattered signal. In an A-IoT communication scenario, the tag is the A-IoT device, and the reader may be the base station, the NR terminal, etc.

For a first device with a capability of independently generating a signal, the response signal received by the second device is sent by at least one of backscatter, uplink transmission, or sidelink transmission, in which the response signal is a backscattered signal, an uplink signal, or a sidelink transmission signal. For a first device without the capability of independently generating a signal, the response signal received by the second device is sent in the backscatter manner, and the response signal is a backscattered signal.

With the method for sending the signal according to embodiments of the disclosure, based on whether the first device has the capability of independently generating the signal, the response signal is fed back to the second device by the at least one of the backscatter, the uplink transmission, and the sidelink transmission, further improving the communication solution for the device with the limited storage capability and the limited independent signal generation capability, such as the A-IoT device, and simultaneously reducing the complexity of the signaling design and the resource overhead and the time delay of signaling transmission..

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In detail, in a scenario where the first device communicates with the second device, the first signal carries one or more pieces of information.

The information often has an indication function. For example, the first indication information for instructing the first device to initiate the initial access procedure may be referred to as initial access information. For example, the second indication information for instructing the first device to receive and/or send the positioning signal may be referred to as positioning information. For example, the indication information for instructing the first device to report information, including report data and control information, may be referred to as report request information.

For another example, the information for performing the authentication on the first device may be referred to as authentication information. For example, the information for verifying the security and integrity of the data stored in the first device may be referred to as integrity verification information. For example, the information for activating the first device wakes up the first device from a non-working state or a state with a low power consumption to start data transmission and reception.

Alternatively, the first signal further carries at least one of: ID information of the first device; or group ID information of a group to which the first device belongs. The ID information of the first device or ID information of the target device carried in the first signal may be an ID number, indicating that a first device corresponding to the ID information needs to receive and/or respond to the first signal. Carrying the group ID information in the first signal indicates that all first devices in an identified group need to receive and/or respond to the first signal.

Alternatively, the first signal may be sent to the first device periodically or aperiodically, depending on a requirement of the second device.

Alternatively, the first signal may be sent to the first device in a unicast or broadcast manner, depending on a requirement of the second device.

With the method for sending the signal according to embodiments of the disclosure, in a scenario where the first device needs to communicate with the second device, the first signal carries information related to various mechanisms such as data transmission, initial access, mobility management, and positioning, which further improves the communication solution for the device with the limited storage capability and the limited independent signal generation capability such as the A-IoT device, and simultaneously reduces the complexity of the signaling design and the resource overhead and the delay of signaling transmission.

In some embodiments, receiving the response signal sent by the first device based on the first signal includes: receiving the response signal on a continuous time domain resource and a continuous frequency domain resource; or receiving the response signal on a continuous time domain resource and a discontinuous frequency domain resource; or receiving the response signal on a discontinuous time domain resource and a continuous frequency domain resource; or receiving the response signal on a discontinuous time domain resource and a discontinuous frequency domain resource.

In detail, the second device receives the response signal sent by the first device, and the transmission resource used by the response signal may be continuous/discontinuous in the frequency domain/time domain.

In a case that the continuous time domain resource is used, one or more pieces of information included in the response signal may be transmitted in the time domain in different orders, which may be referred to FIG. 2.

In a case that the discontinuous time domain resource is used, one or more pieces of information included in the response signal may be transmitted in the time domain in different orders and combination manners, which may be referred to FIG. 3.

In a case that continuous frequency domain resources are used, one or more pieces of information included in the response signal may be transmitted in the frequency domain in different orders, which may be referred to FIG. 4.

In a case that the discontinuous frequency domain resource is used, one or more pieces of information included in the response signal may be transmitted in the frequency domain in different orders and combination manners, which may be referred to FIG. 5.

In a scenario where transmission resources are discontinuous, multiple response information included in the response signal may be divided into different subsegments. One subsegment includes one or more pieces of the response information. A transmission order of different subsegments may be changed, and a transmission order of different response information in one subsegment may also be changed.

With the method for sending the signal according to embodiments of the disclosure, it is supported that the first device feeds back the response signal on the continuous/discontinuous time domain/frequency domain resource in a scenario where the first device communicates with the second device, which further improves the communication solution for the device with the limited storage capability and the limited independent signal generation capability such as the A-IoT device, and simultaneously provides the certain flexibility for scheduling the transmission resource.

Besides a scenario where the first device communicates with the second device and feeds the response signal back to the second device, there is another scenario where the first device performs the first operation based on the information carried in the first signal after receiving the first signal, and does not provide any feedback to the second device, for example, a scenario such as synchronization, energy storage, etc. In a practical implementation, the first signal may often carry multiple types of information, and the multiple types of information includes both information which needs feedback from the first device and information which does not need feedback from the first device.

In some embodiments, the first signal carries timing information of the second device and/or fourth indication information for instructing the first device to obtain the timing information, and the first operation includes performing synchronization with the second device.

In detail, for a synchronization scenario, the first signal carries timing information of the second device and/or fourth indication information for instructing the first device to obtain the timing information of the first device. Then, the first device completes synchronization with the second device based on such type of information carried in the first signal. The synchronization in embodiments of the disclosure may be fine synchronization or coarse synchronization.

In some embodiments, the first signal carries fifth indication information for indicating energy of the first signal and/or sixth indication information for instructing the first device to obtain the energy of the first signal, and the first operation includes obtaining the energy of the first signal.

In detail, in an energy storage scenario, the first signal at least carries fifth indication information for indicating energy of the first signal and/or sixth indication information for instructing the first device to obtain the energy of the first signal. The first device obtains the energy of the first signal based on the fifth indication information and/or the sixth indication information.

The first signal is a radio frequency signal. In a case that the first device has an energy storage capability, the first device obtains energy of the radio frequency signal for subsequent signal transmission and reception.

Alternatively, regardless of whether the first device needs to provide feedback of the first signal to the second device or does not need to provide feedback of the first signal to the second device, the first signal may also carry at least one of: ID information of the first device; or group ID information of a group to which the first device belongs. The ID information of the first device or ID information of the target device carried in the first signal may be an ID number, indicating that a first device corresponding to the ID information needs to receive and/or respond to the first signal. Carrying the group ID information in the first signal indicates that all first devices in an identified group need to receive and/or respond to the first signal.

With the method for sending the signal according to embodiments of the disclosure, it is supported that the first device independently performs a corresponding operation based on the information carried in the first signal in a case that the first signal carries the information that does not need the feedback from the first device, further improving the communication solution for the device with the limited storage capability and the limited independent signal generation capability such as the A-IoT device in a scenario such as synchronization and energy storage, and simultaneously reducing the complexity of the signaling design and the resource overhead and time delay of the signaling transmission..

In some embodiments, sending the first signal to the first device includes: sending the first signal to the first device in a form of a bit stream.

In detail, a form of the first signal may be the form of the bit stream. Different bit fields correspond to different information, which collectively constitute a sequence of the information carried in the first signal.

In some embodiments, sending the first signal to the first device includes: sending the first signal on a continuous time domain resource and a continuous frequency domain resource; or sending the first signal on a continuous time domain resource and a discontinuous frequency domain resource; or sending the first signal on a discontinuous time domain resource and a continuous frequency domain resource; or sending the first signal on a discontinuous time domain resource and a discontinuous frequency domain resource.

In detail, sending a transmission resource used by the first signal may be continuous/discontinuous in the frequency domain/time domain.

In a case that the continuous time domain resource is used, one or more pieces of information included in the first signal may be transmitted in the time domain in different orders, which may be referred to FIG. 6.

In a case that the discontinuous time domain resource is used, one or more pieces of information included in the first signal may be transmitted in the time domain in different orders and combination manners, which may be referred to FIG. 7.

In a case that the continuous frequency domain resource is used, one or more pieces of information included in the first signal may be transmitted in the frequency domain in different orders, which may be referred to FIG. 8.

In a case that the discontinuous frequency domain resource is used, one or more pieces of information included in the first signal may be transmitted in the frequency domain in different orders and combination manners, which may be referred to FIG. 9.

In a scenario where the transmission resource is discontinuous, multiple pieces of information included in the first signal may be divided into different subsegments. One subsegment includes one or more pieces of information. A transmission order of different subsegments may be changed, and a transmission order of different pieces of information in one subsegment may also be changed.

With the method for sending the signal according to embodiments of the disclosure, it is supported that the first device receives the signal on the continuous/discontinuous time domain/frequency domain resource, which further improves the communication solution for the device with the limited storage capability and the limited independent signal generation capability such as the A-IoT device, and simultaneously provides certain flexibility for scheduling the transmission resource.

Description is further made below to the technical solution in embodiments of the disclosure by a detailed example.

### Example 1:

FIG. 11 is a flow chart illustrating a method for transmitting a signal according to an embodiment of the disclosure. As illustrated in FIG. 11, the method at least includes the following.

At step A, the second device sends a first signal to at least one A-IoT device.

The first signal is a bit stream signal including at least one function indication. Content of the first signal may include one or more of: energy harvesting information, synchronization information, initial access information, authentication information, positioning information, integrity verification information, activation information, report request information, target terminal ID, target group terminal ID, and other options. In other words, the first signal carries one or more pieces of information above. The one or more pieces of information correspond to different device types of A-IoT devices. The different device types include type A, type B, and type C.

The A-IoT device determines, based on a manner predefined by a protocol or preconfigured by a second device, signal waveforms corresponding to different information, a manner and an order in which signals corresponding to different information constitute a first signal, time-frequency resources occupied by information corresponding to different device types in the first signal, and so on. The A-IoT device receives the first signal based on above information.

The pre-configuration manner may be one or more of a system message, RRC information, a MAC CE, DCI, and so on. The signal waveform may be ASK, FSK, OFDM, or so on. Manners in which signals corresponding to different information constitute the first signal may be time division multiplexing, frequency division multiplexing, code division multiplexing, etc.

Transmission resources occupied by the first signal may be continuous or discontinuous in the time domain and/or the frequency domain.

At step B, the A-IoT device sends a response signal to the second device.

The response signal is a bit stream signal including at least one piece of response information, in which the response signal carries response information of the A-IoT device for some or all of the information carried in the first signal. Transmission resources occupied by the response signal may be continuous or discontinuous in the time domain and/or the frequency domain.

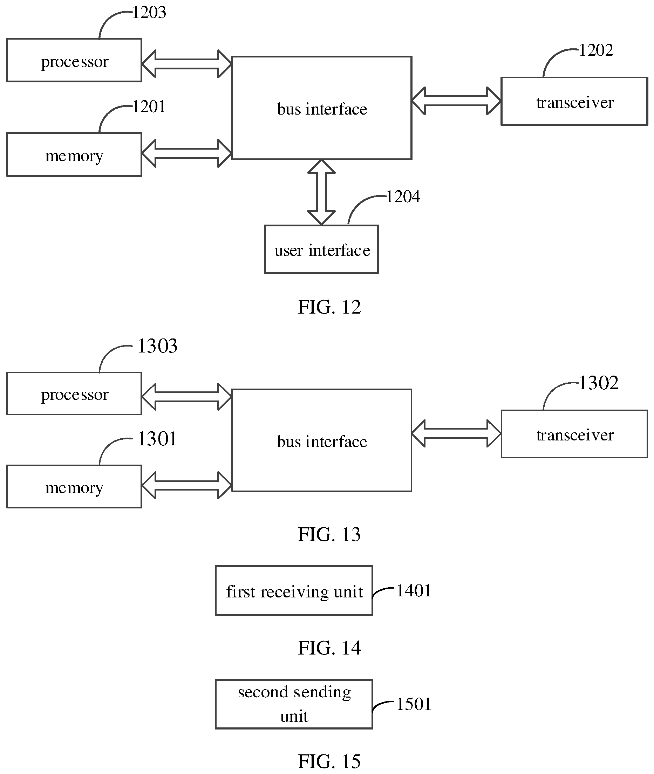

FIG. 12 is a block diagram illustrating a first device according to an embodiment of the disclosure. As illustrated in FIG. 12, the first device includes a memory 1201, a transceiver 1202, and a processor 1203.

The memory 1201 is configured to store a computer program, and the transceiver 1202 is configured to send and receive data under control of the processor 1203.

In detail, the transceiver 1202 is configured to receive and send data under control of the processor 1203.

In FIG. 12, a bus architecture may include any number of interconnected buses and bridges, and is specifically linked by various circuits between one or more processors represented by the processor 1203 and a memory represented by the memory 1201. The bus architecture may further link various other circuits together, such as a peripheral device, a voltage stabilizer, a power management circuit, and so on, which are well known in the art, and therefore, which is not further described herein. A bus interface provides an interface. The transceiver 1202 may be multiple elements, that is, a transmitter and a receiver, and provides units for communicating with various other apparatuses on a transmission medium. The transmission medium includes a wireless channel, a wired channel, an optical cable, and other transmission medium. For different UEs, a user interface 1204 may further be an interface that may externally or internally connect to a device, and the connected device includes, but is not limited to, a keypad, a display, a speaker, a microphone, a joystick, and so on.

The processor 1203 is responsible for managing the bus architecture and general processing, and the memory 1201 may store data used by the processor 1203 when performing an operation.

Alternatively, the processor 1203 may be a central processing unit (CPU), an application specific integrated circuit (ASIC), a field-programmable gate array (FPGA), or a complex programmable logic device (CPLD), and the processor may also employ a multi-core architecture.

The processor, by calling the computer program stored in the memory, is configured to perform any method provided by embodiments of the disclosure based on obtained executable instructions. The processor and the memory may also be physically arranged separately.

The processor 1203 is configured to read the computer program in the memory 1201 and perform: receiving a first signal sent by a second device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the processor 1203 is configured to read the computer program in the memory 1201 and further perform: determining, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the processor 1203 is configured to read the computer program in the memory 1201 and further perform: sending a response signal to the second device based on the first signal, the response signal including response information of some or all of the information carried in the first signal.

In some embodiments, sending the response signal to the second device includes: sending the response signal to the second device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, sending the response signal to the second device includes: sending the response signal on a continuous time domain resource and a continuous frequency domain resource; or sending the response signal on a continuous time domain resource and a discontinuous frequency domain resource; or sending the response signal on a discontinuous time domain resource and a continuous frequency domain resource; or sending the response signal on a discontinuous time domain resource and a discontinuous frequency domain resource.

In some embodiments, the first operation includes: performing synchronization with the second device based on timing information of the second device carried in the first signal and/or fourth indication information carried in the first signal for instructing the first device to obtain the timing information.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In some embodiments, receiving the first signal sent by the second device includes: receiving the first signal sent by the second device in a form of a bit stream.

In some embodiments, receiving the first signal sent by the second device includes: receiving the first signal on a continuous time domain resource and a continuous frequency domain resource; or receiving the first signal on a continuous time domain resource and a discontinuous frequency domain resource; or receiving the first signal on a discontinuous time domain resource and a continuous frequency domain resource; or receiving the first signal on a discontinuous time domain resource and a discontinuous frequency domain resource.

In some embodiments, the first signal further carries at least one of: ID information of the first device; or group ID information of a group to which the first device belongs.

It needs to be noted that the above first device according to embodiments of the disclosure may perform all steps in the method implemented in the method embodiments where the first device is an execution subject, and may achieve a same technical effect. Some identical to those in the method embodiments and beneficial effects are not described in detail here.

FIG. 13 is a block diagram illustrating a second device according to an embodiment of the disclosure. The second device includes a memory 1301, a transceiver 1302, and a processor 1303. The memory 1301 is configured to store a computer program; and the transceiver 1302 is configured to send and receive data under control of the processor 1303.

In detail, the transceiver 1302 is configured to send and receive data under control of the processor 1303.

In FIG. 13, a bus architecture may include any number of interconnected buses and bridges, and is specifically linked by various circuits between one or more processors represented by the processor 1303 and a memory represented by the memory 1301. The bus architecture may further link various other circuits together, such as a peripheral device, a voltage stabilizer, a power management circuit, and so on, which are well known in the art, and therefore, will not be further described herein. A bus interface provides an interface.

The transceiver 1302 may be multiple elements, that is, a transmitter and a receiver, and provides units for communicating with various other apparatuses on a transmission medium. The transmission medium includes a wireless channel, a wired channel, an optical cable, and other transmission medium. The processor 1303 is responsible for managing the bus architecture and general processing, and the memory 1301 may store data used by the processor 1303 when performing an operation.

The processor 1303 may be a central processing unit (CPU), an application specific integrated circuit (ASIC), a field-programmable gate array (FPGA), or a complex programmable logic device (CPLD), and the processor may also adopt a multi-core architecture.

The processor 1303 is configured to read the computer program in the memory 1301 and perform: sending a first signal to a first device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the processor 1303 is configured to read the computer program in the memory 1301 and further perform: indicating at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the processor 1303 is configured to read the computer program in the memory 1301 and further perform: receiving a response signal sent by the first device based on the first signal, the response signal including response information of some or all of the information carried in the first signal.

In some embodiments, receiving the response signal sent by the first device based on the first signal includes: receiving the response signal sent by the first device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, receiving the response signal sent by the first device based on the first signal includes: receiving the response signal on a continuous time domain resource and a continuous frequency domain resource; or receiving the response signal on a continuous time domain resource and a discontinuous frequency domain resource; or receiving the response signal on a discontinuous time domain resource and a continuous frequency domain resource; or receiving the response signal on a discontinuous time domain resource and a discontinuous frequency domain resource.

In some embodiments, the first signal carries timing information of the second device and/or fourth indication information for instructing the first device to obtain the timing information, and the first operation includes performing synchronization with the second device.

In some embodiments, the first signal carries fifth indication information for indicating energy of the first signal and/or sixth indication information for instructing the first device to obtain the energy of the first signal, and the first operation includes obtaining the energy of the first signal.

In some embodiments, sending the first signal to the first device includes: sending the first signal to the first device in a form of a bit stream.

In some embodiments, sending the first signal to the first device includes: sending the first signal on a continuous time domain resource and a continuous frequency domain resource; or sending the first signal on a continuous time domain resource and a discontinuous frequency domain resource; or sending the first signal on a discontinuous time domain resource and a continuous frequency domain resource; or sending the first signal on a discontinuous time domain resource and a discontinuous frequency domain resource.

In some embodiments, the first signal further carries at least one of: ID information of the first device; or group ID information of a group to which the first device belongs.

It needs to be noted that the above second device provided by the embodiments of the disclosure may perform all steps in the method implemented in the method embodiments where the second device is an execution subject, and may achieve a same technical effect. Some identical to those in the method embodiments and beneficial effects are not described in detail here.

FIG. 14 is a block diagram illustrating an apparatus for receiving a signal according to an embodiment of the disclosure. As illustrated in FIG. 14, the apparatus includes: a first receiving unit 1401, configured to receive a first signal sent by a second device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the apparatus also includes: a determining unit, configured to determine, in a predefined or preconfigured manner, at least one of: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the apparatus also includes: a first sending unit, configured to send a response signal to the second device based on the first signal, the response signal including response information of some or all of the information carried in the first signal.

In some embodiments, the first sending unit is configured to: send the response signal to the second device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, the first sending unit is configured to: send the response signal on a continuous time domain resource and a continuous frequency domain resource; or send the response signal on a continuous time domain resource and a discontinuous frequency domain resource; or send the response signal on a discontinuous time domain resource and a continuous frequency domain resource; or send the response signal on a discontinuous time domain resource and a discontinuous frequency domain resource.

In some embodiments, the first operation includes: performing synchronization with the second device based on timing information of the second device carried in the first signal and/or fourth indication information carried in the first signal for instructing the first device to obtain the timing information.

In some embodiments, the first operation includes: obtaining energy of the first signal based on fifth indication information carried in the first signal for indicating the energy of the first signal and/or sixth indication information carried in the first signal for instructing the first device to obtain the energy of the first signal.

In some embodiments, the first receiving unit 1401 is configured to: receive the first signal sent by the second device in a form of a bit stream.

In some embodiments, the first receiving unit 1401 is configured to: receive the first signal on a continuous time domain resource and a continuous frequency domain resource; or receive the first signal on a continuous time domain resource and a discontinuous frequency domain resource; or receive the first signal on a discontinuous time domain resource and a continuous frequency domain resource; or receive the first signal on a discontinuous time domain resource and a discontinuous frequency domain resource.

In some embodiments, the first signal also carries at least one of: ID information of the first device; or group ID information of a group to which the first device belongs.

FIG. 15 is a block diagram illustrating an apparatus for sending a signal according to an embodiment of the disclosure. As illustrated in FIG. 15, the apparatus includes: a second sending unit 1501, configured to send a first signal to a first device, the first signal being used to trigger the first device to communicate with the second device, and/or, the first signal being used to trigger the first device to perform a first operation, in which the first signal carries information corresponding to at least one device type of the first device.

In some embodiments, the at least one device type includes: A-IoT device type A; A-IoT device type B; or A-IoT device type C.

In some embodiments, the apparatus further includes: an indicating unit, configured to indicate at least one of following to the first device in a preconfigured manner: a signal waveform corresponding to the information carried in the first signal; a manner in which a signal corresponding to the information carried in the first signal constitutes the first signal; an order of the information carried in the first signal; a time domain resource occupied by the information carried in the first signal; or a frequency domain resource occupied by the information carried in the first signal.

In some embodiments, in a case that the first signal is used to trigger the first device to communicate with the second device, the apparatus also includes: a second receiving unit, configured to receive a response signal sent by the first device based on the first signal, the response signal including response information of some or all of the information carried in the first signal.

In some embodiments, the second receiving unit is configured to: receive the response signal sent by the first device using at least one of backscatter, uplink transmission, or sidelink transmission.

In some embodiments, the first signal carries at least one of: first indication information for instructing the first device to initiate an initial access procedure; second indication information for instructing the first device to receive and/or send a positioning signal; third indication information for instructing the first device to report information; information for performing authentication on the first device; information for verifying security and integrity of data stored in the first device; or information for activating the first device.

In some embodiments, the second receiving unit is configured to: receive the response signal on a continuous time domain resource and a continuous frequency domain resource; or receive the response signal on a continuous time domain resource and a discontinuous frequency domain resource; or receive the response signal on a discontinuous time domain resource and a continuous frequency domain resource; or receive the response signal on a discontinuous time domain resource and a discontinuous frequency domain resource.

In some embodiments, the first signal carries timing information of the second device and/or fourth indication information for instructing the first device to obtain the timing information, and the first operation includes performing synchronization with the second device.

In some embodiments, the first signal carries fifth indication information for indicating energy of the first signal and/or sixth indication information for instructing the first device to obtain the energy of the first signal, and the first operation includes obtaining the energy of the first signal.

In some embodiments, the second sending unit 1501 is configured to: send the first signal to the first device in a form of a bit stream.

In some embodiments, the second sending unit 1501 is configured to: send the first signal on a continuous time domain resource and a continuous frequency domain resource; or send the first signal on a continuous time domain resource and a discontinuous frequency domain resource; or send the first signal on a discontinuous time domain resource and a continuous frequency domain resource; or send the first signal on a discontinuous time domain resource and a discontinuous frequency domain resource.

In some embodiments, the first signal also carries at least one of: ID information of the first device; or group ID information of a group to which the first device belongs.

The method and the apparatus provided by the various embodiments of the disclosure are based on a same application idea. Since principles of problem solving by the method and the apparatus are similar, implementations of the method and the apparatus may be referred to each other, which is not elaborated in the repetition aspect.

It needs to be noted that a division of units in embodiments of the disclosure is schematic, and is merely a division of logical functions. There may be other division manner in an actual implementation. In addition, functional units in various embodiments of the disclosure may be integrated into one processing unit, or each unit may exist alone physically, or two or more units may be integrated into one unit. The above integrated unit may be implemented in the form of hardware or in the form of a software functional unit.

In a case that the integrated unit is implemented in the form of the software functional unit and is sold or used as an independent product, the integrated unit may be stored in a processor-readable storage medium. Based on such understanding, the technical solution of the disclosure, in essence, or some contributing to the prior art, or all or some of the technical solution, may be embodied in the form of a software product. The computer software product is stored in a storage medium and includes several instructions enabling a computer device (which may be a personal computer, a server, or a network device, etc.) or a processor for performing all or some of the steps of the method described in various embodiments of the disclosure. The above storage medium includes: a U disk, a mobile hard disk, a read-only memory (ROM), a random access memory (RAM), a magnetic disk, an optical disk, and various media that may store program codes.

It needs to be noted that the above apparatus provided by embodiments of the disclosure may implement all steps in the method implemented in the method embodiments and may achieve a same technical effect. Some identical to those in the method embodiments and the beneficial effect are not described in detail here.

On the other hand, embodiments of the disclosure also provide a non-transitory readable storage medium for storing a computer program. The computer program is configured to cause a processor to perform the method for receiving a signal provided by the above embodiments, including: receiving a first signal sent by a second device, the first signal being used to trigger the first device to communicate with the second device, and/or, the first signal being used to trigger the first device to perform a first operation, in which the first signal carries information corresponding to at least one device type of the first device.

Alternatively, the computer program is configured to cause a processor to perform the method for sending a signal provided by above embodiments, including: sending a first signal to a first device, the first signal being used to trigger the first device to communicate with the second device, and/or, the first signal being used to trigger the first device to perform a first operation, in which the first signal carries information corresponding to at least one device type of the first device.

The non-transitory readable storage medium may be any available medium or data storage device that the processor may access, including but not limited to, a magnetic memory (such as, a floppy disk, a hard disk, a magnetic tape, a magneto-optical disk (MO), etc.), an optical memory (such as, a compact disc (CD), a digital video disk (DVD), a blue-ray disc (BD), a holographic versatile disc (HVD), etc.), and a semiconductor memory (such as, a read-only memory (ROM), an erasable programmable read-only memory (EPROM), an electrically erasable programmable read-only memory (EEPROM), a Negative-AND flash (NAND FLASH), a solid state drive (SSD)), etc.

The skilled in the art should understand that, embodiments of the disclosure may provide a method, a system, or a computer program product. Therefore, the disclosure may take the form of an entirely hardware embodiment, an entirely software embodiment, or an embodiment combining with software and hardware. Moreover, the disclosure may be employ the form of the computer program product implemented on one or more computer-readable storage medium (including but not limited to a disk memory and an optical memory, etc.) including computer-executable program codes.

The disclosure is described with reference to flow charts and/or block diagrams according to the method, the apparatus (system), and the computer program product of the embodiments of the disclosure. It should be understood that the computer executable instructions implement each flow and/or each block in the flow charts and/or block diagrams and a combination of flows and/or blocks in the flow charts and/or block diagrams. These computer executable instructions may be provided to a processor of a general purpose computer, a special purpose computer, an embedded processor, or other programmable data processing device to generate a machine, such that an apparatus for implementing a specific function at one or more flows in the flowcharts and/or one or more blocks in the block diagrams is generated by instructions executed by the processor of the computer or other programmable data processing device.

These computer executable instructions may be stored in a processor readable memory which may guide the computer or other programmable data processing device to work in a specific manner, such that the instructions stored in the processor readable memory include a product of an instruction apparatus. The instruction apparatus implements the specific function at the one or more flows in the flowcharts and/or the specific function at the one or more blocks in the block diagrams.

These computer executable instructions may be loaded in the computer or other programmable data processing device, such that a series of steps are executed in the computer or other programmable data processing device to generate processing implemented by the computer, and the instructions executed in the computer or other programmable data processing device provide steps for implementing the specific function at the one or more flows in the flowcharts and/or the specific function at the one or more blocks in the block diagrams.

Obviously, those skilled in the art may make various modifications and variations to the disclosure without departing from the spirit and scope of the disclosure. Thus, if these modifications and variations of the disclosure fall within the scope of the claims of the disclosure and its equivalent technologies, the disclosure is also intended to include these modifications and variations.

## Claims

1. A method for receiving a signal, performed by a first device, comprising:
receiving a first signal sent by a second device, the first signal being used to trigger the first device to communicate with the second device, and/or, the first signal being used to trigger the first device to perform a first operation,
wherein the first signal carries information corresponding to at least one device type of the first device.

2. The method of claim 1, wherein the at least one device type comprises:
ambient-Internet of Things (A-IoT) device type A;
A-IoT device type B; or
A-IoT device type C.

3. The method of claim 1, further comprising:
determining, in a predefined or preconfigured manner, at least one of:
a signal waveform corresponding to the information carried in the first signal;
a manner in which a signal corresponding to the information carried in the first signal constitutes the first signal;
an order of the information carried in the first signal;
a time domain resource occupied by the information carried in the first signal; or
a frequency domain resource occupied by the information carried in the first signal.

4. The method of claim 1, wherein, in a case that the first signal is used to trigger the first device to communicate with the second device, the method further comprises:
sending a response signal to the second device based on the first signal, the response signal comprising response information of some or all of the information carried in the first signal.

5. The method of claim 4, wherein sending the response signal to the second device comprises:
sending the response signal to the second device using at least one of backscatter, uplink transmission, or sidelink transmission.

6. The method of claim 4 or 5, wherein the first signal carries at least one of:
first indication information for instructing the first device to initiate an initial access procedure;
second indication information for instructing the first device to receive and/or send a positioning signal;
third indication information for instructing the first device to report information;
information for performing authentication on the first device;
information for verifying security and integrity of data stored in the first device; or
information for activating the first device.

7. The method of claim 4, wherein sending the response signal to the second device comprises:
sending the response signal on a continuous time domain resource and a continuous frequency domain resource; or
sending the response signal on a continuous time domain resource and a discontinuous frequency domain resource; or
sending the response signal on a discontinuous time domain resource and a continuous frequency domain resource; or
sending the response signal on a discontinuous time domain resource and a discontinuous frequency domain resource.

8. The method of claim 1, wherein the first operation comprises:
performing synchronization with the second device based on timing information of the second device carried in the first signal and/or fourth indication information carried in the first signal for instructing the first device to obtain the timing information.

9. The method of claim 1, wherein the first operation comprises:
obtaining energy of the first signal based on fifth indication information carried in the first signal for indicating the energy of the first signal and/or sixth indication information carried in the first signal for instructing the first device to obtain the energy of the first signal.

10. The method of claim 1, wherein receiving the first signal sent by the second device comprises:
receiving the first signal sent by the second device in a form of a bit stream.

11. The method of claim 1, wherein receiving the first signal sent by the second device comprises:
receiving the first signal on a continuous time domain resource and a continuous frequency domain resource; or
receiving the first signal on a continuous time domain resource and a discontinuous frequency domain resource; or
receiving the first signal on a discontinuous time domain resource and a continuous frequency domain resource; or
receiving the first signal on a discontinuous time domain resource and a discontinuous frequency domain resource.

12. The method of claim 4, 8 or 9, wherein the first signal further carries at least one of:
identity (ID) information of the first device; or
group ID information of a group to which the first device belongs.

13. A method for sending a signal, performed by a second device, comprising:
sending a first signal to a first device, the first signal being used to trigger the first device to communicate with the second device, and/or, the first signal being used to trigger the first device to perform a first operation,
wherein the first signal carries information corresponding to at least one device type of the first device.

14. The method of claim 13, wherein the at least one device type comprises:
ambient-Internet of Things (A-IoT) device type A;
A-IoT device type B; or
A-IoT device type C.

15. The method of claim 13, further comprising:
indicating at least one of following to the first device in a preconfigured manner:
a signal waveform corresponding to the information carried in the first signal;
a manner in which a signal corresponding to the information carried in the first signal constitutes the first signal;
an order of the information carried in the first signal;
a time domain resource occupied by the information carried in the first signal; or
a frequency domain resource occupied by the information carried in the first signal.

16. The method of claim 13, wherein, in a case that the first signal is used to trigger the first device to communicate with the second device, the method further comprises:
receiving a response signal sent by the first device based on the first signal, the response signal comprising response information of some or all of the information carried in the first signal.

17. The method of claim 16, wherein receiving the response signal sent by the first device based on the first signal comprises:
receiving the response signal sent by the first device using at least one of backscatter, uplink transmission, or sidelink transmission.

18. The method of claim 16 or 17, wherein the first signal carries at least one of:
first indication information for instructing the first device to initiate an initial access procedure;
second indication information for instructing the first device to receive and/or send a positioning signal;
third indication information for instructing the first device to report information;
information for performing authentication on the first device;
information for verifying security and integrity of data stored in the first device; or
information for activating the first device.

19. The method of claim 16, wherein receiving the response signal sent by the first device based on the first signal comprises:
receiving the response signal on a continuous time domain resource and a continuous frequency domain resource; or
receiving the response signal on a continuous time domain resource and a discontinuous frequency domain resource; or
receiving the response signal on a discontinuous time domain resource and a continuous frequency domain resource; or
receiving the response signal on a discontinuous time domain resource and a discontinuous frequency domain resource.

20. The method of claim 13, wherein the first signal carries timing information of the second device and/or fourth indication information for instructing the first device to obtain the timing information, and the first operation comprises performing synchronization with the second device.

21. The method of claim 13, wherein the first signal carries fifth indication information for indicating energy of the first signal and/or sixth indication information for instructing the first device to obtain the energy of the first signal, and the first operation comprises obtaining the energy of the first signal.

22. The method of claim 13, wherein sending the first signal to the first device comprises:
sending the first signal to the first device in a form of a bit stream.

23. The method of claim 13, wherein sending the first signal to the first device comprises:
sending the first signal on a continuous time domain resource and a continuous frequency domain resource; or
sending the first signal on a continuous time domain resource and a discontinuous frequency domain resource; or
sending the first signal on a discontinuous time domain resource and a continuous frequency domain resource; or
sending the first signal on a discontinuous time domain resource and a discontinuous frequency domain resource.

24. The method of claim 16, 20 or 21, wherein the first signal further carries at least one of:
identity (ID) information of the first device; or
group ID information of a group to which the first device belongs.

25. A first device, comprising a memory, a transceiver, and a processor,
wherein the memory is configured to store a computer program; the transceiver is configured to send and receive data under control of the processor; and the processor is configured to read the computer program in the memory and perform a following operation:
receiving a first signal sent by a second device, wherein the first signal being used to trigger the first device to communicate with the second device, and/or, the first signal being used to trigger the first device to perform a first operation,
wherein the first signal carries information corresponding to at least one device type of the first device.

26. The first device of claim 25, wherein the at least one device type comprises:
ambient-Internet of Things (A-IoT) device type A;
A-IoT device type B; or
A-IoT device type C.

27. The first device of claim 25, wherein the processor is further configured to perform:
determining, in a predefined or preconfigured manner, at least one of:
a signal waveform corresponding to the information carried in the first signal;
a manner in which a signal corresponding to the information carried in the first signal constitutes the first signal;
an order of the information carried in the first signal;
a time domain resource occupied by the information carried in the first signal; or
a frequency domain resource occupied by the information carried in the first signal.

28. The first device of claim 25, wherein, in a case that the first signal is used to trigger the first device to communicate with the second device, the processor is further configured to perform:
sending a response signal to the second device based on the first signal, the response signal comprising response information of some or all of the information carried in the first signal.

29. The first device of claim 28, wherein sending the response signal to the second device comprises:
sending the response signal to the second device using at least one of backscatter, uplink transmission, or sidelink transmission.

30. The first device of claim 28 or 29, wherein the first signal carries at least one of:
first indication information for instructing the first device to initiate an initial access procedure;
second indication information for instructing the first device to receive and/or send a positioning signal;
third indication information for instructing the first device to report information;
information for performing authentication on the first device;
information for verifying security and integrity of data stored in the first device; or
information for activating the first device.

31. The first device of claim 28, wherein sending the response signal to the second device comprises:
sending the response signal on a continuous time domain resource and a continuous frequency domain resource; or
sending the response signal on a continuous time domain resource and a discontinuous frequency domain resource; or
sending the response signal on a discontinuous time domain resource and a continuous frequency domain resource; or
sending the response signal on a discontinuous time domain resource and a discontinuous frequency domain resource.

32. The first device of claim 25, wherein the first operation comprises:
performing synchronization with the second device based on timing information of the second device carried in the first signal and/or fourth indication information carried in the first signal for instructing the first device to obtain the timing information.

33. The first device of claim 25, wherein the first operation comprises:
obtaining energy of the first signal based on fifth indication information carried in the first signal for indicating the energy of the first signal and/or sixth indication information carried in the first signal for instructing the first device to obtain the energy of the first signal.

34. The first device of claim 25, wherein receiving the first signal sent by the second device comprises:
receiving the first signal sent by the second device in a form of a bit stream.

35. The first device of claim 25, wherein receiving the first signal sent by the second device comprises:
receiving the first signal on a continuous time domain resource and a continuous frequency domain resource; or
receiving the first signal on a continuous time domain resource and a discontinuous frequency domain resource; or
receiving the first signal on a discontinuous time domain resource and a continuous frequency domain resource; or
receiving the first signal on a discontinuous time domain resource and a discontinuous frequency domain resource.

36. The first device of claim 26, 32 or 33, wherein the first signal further carries at least one of:
identity (ID) information of the first device; or
group ID information of a group to which the first device belongs.

37. A second device, comprising a memory, a transceiver, and a processor,
wherein the memory is configured to store a computer program; the transceiver is configured to send and receive data under control of the processor; and the processor is configured to read the computer program in the memory and perform a following operation:
sending a first signal to a first device, wherein the first signal being used to trigger the first device to communicate with the second device, and/or, the first signal being used to trigger the first device to perform a first operation,
wherein the first signal carries information corresponding to at least one device type of the first device.
